(19) Europäisches Patentamt
European Patent Office
Office européen des brevets

(11) Veröffentlichungsnummer: **0 121 498**
**A1**

(12) # EUROPÄISCHE PATENTANMELDUNG

(21) Anmeldenummer: **84810143.2**

(22) Anmeldetag: **26.03.84**

(51) Int. Cl.³: **A 01 N 25/22**
A 01 N 47/24

(30) Priorität: **30.03.83 CH 1759/83**

(43) Veröffentlichungstag der Anmeldung:
**10.10.84 Patentblatt 84/41**

(84) Benannte Vertragsstaaten:
**AT BE CH DE FR GB IT LI NL**

(71) Anmelder: **CIBA-GEIGY AG**
**Postfach**
**CH-4002 Basel(CH)**

(72) Erfinder: **Neuenschwander, Ernst, Dr.**
**Moosweg 20**
**CH-4125 Riehen(CH)**

(72) Erfinder: **Hofmann, Eberhard**
**Schafmattweg 76**
**CH-4102 Binningen(CH)**

(54) **Stabilisierung eines sulfenylierten Carbamates.**

(57) Stabilisierung der insektiziden Verbindung der Formel

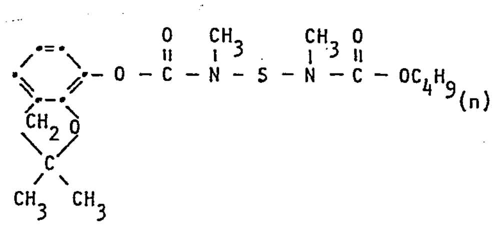

oder der Mittel, welches diese Verbindung als aktive Komponente enthalten, durch den Zusatz von epoxidiertem Sojaöl.

EP 0 121 498 A1

CIBA-GEIGY AG
Basel (Schweiz) 5-14372/=

Stabilisierung eines sulfenylierten Carbamates

Die vorliegende Erfindung betrifft die Stabilisierung der insektiziden Verbindungen der Formel

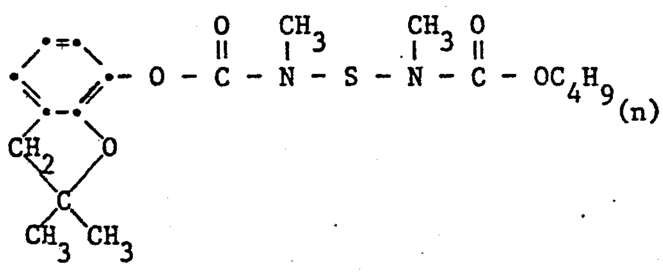

(I)

oder der Mittel, welche die Verbindung der Formel I als aktive Komponente enthalten, durch den Zusatz von epoxidiertem Sojaöl.

Die Mittel enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 %, eines Tensides.

Die Verbindung der Formel I, welche ein breites insektizides Wirkungsspektrum hat, ist in der amerikanischen Patentschrift Nr. 4,342,778 beschrieben.

Aus der amerikanischen Patentschrift Nr. 4,281,014 ist es bekannt, dass N-aminosulfenylierte Derivate des Carbofurans (2,3-Dihydro-2,2-dimethylbenzofuran-7-yl-methylcarbamat) nicht lagerstabil sind. Gemäss dieser Patentschrift können aber insbesondere N-Dialkyl-aminosulfenyl Derivate des Carbofurans durch den Zusatz von epoxidierten Verbindungen, wie z.B. epoxidierten Pflanzenölen, stabilisiert werden.

Es wurde nun gefunden, dass auch die Verbindung der Formel I, welche ein N-Alkoxycarbonyl-N-alkyl-aminosulfenyl Derivat des Carbofurans ist, oder Mittel, welche 0,1 bis 99 % dieser Verbindung als aktive Komponente enthalten, durch den Zusatz von 0,01 bis 20 %, insbesondere 1 bis 10 % epoxidiertem Sojaöl, bezogen auf die Verbindung der Formel I, lagerstabilisiert werden können.

Die zu epoxidierenden Sojaöle enthalten die Triglyceride der Fettsäuren Palmitinsäure, Stearinsäure, Oleinsäure, Linolsäure und Linolensäure, und freie Fettsäuren, sowie Lecithine, Sitosterin, Stigmasterin und Tocopherole. Diese Oele haben eine Verseifungszahl von 170 bis 200 und eine Jodzahl von 80 bis 200.

Die bevorzugten epoxidierten Sojaöle haben eine Verseifungszahl von 170 bis 200, eine Jodzahl von max. 6 und einen Epoxidierungsgrad von 4 bis 12%. Besonders bevorzugt ist das epoxidierte Sojaöl mit einer Verseifungszahl von 175 bis 185, einer Jodzahl von max. 6 und einem Epoxidierungsgrad von 6 bis 7%. Verfahren zur Herstellung des bevorzugten epoxidierten Sojaöls sind in den deutschen Auslegeschriften Nr. 1,543,465 und Nr. 1,185,189 beschrieben.

Die insektiziden Mittel, welche die durch epoxidiertes Sojaöl stabilisierte Verbindung der Formel I und gegebenenfalls einen festen oder flüssigen Zusatzstoff enthalten, werden in bekannter Weise hergestellt, z.B. durch inniges Vermischen und/oder Vermahlen des Wirkstoffes mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther,

Ketone wie Cyclohexanon, stark polare Lösungsmittel wie N-Methyl-2-pyrrolidon, Dimethylsulfoxid oder Dimethylformamid.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäuremethyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes oder Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykoleinheit 1 bis 5 Aethylenglykoleinheiten.

Als Beispiele nichtionischer Tenside seien Nonylphenolpolyäthoxyäthanole, Ricinusölpolyglykoläther, Polypropylenpolyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi-(2-chloräthyl)-äthylammoniumbromid.

Die in der Formulierungstechnik gebräuchlichen Tenside sind u.a. in folgender Publikation beschrieben:

"Mc Cutcheon's Detergents and Emulsifiers Annual" MC Publishing Corp., Ringwood, New Jersey, 1979.

Während als Handelsware eher konzentrierte Mittel bevorzugt werden, verwendet der Endverbraucher in der Regel verdünnte Mittel.

Die Mittel können auch weitere Zusätze wie Entschäumer, Viskositätsregulatoren, Bindemittel, Haftmittel sowie Dünger oder andere Wirkstoffe zur Erzielung spezieller Effekte enthalten.

<u>Beispiel 1:</u> Chemische Stabilität von

[(2,2-Dimethyl-2,3-dihydrobenzofuranyl-(7)-oxy)-(N-methylamino)-carbonyl]-[n-butoxy-(N'-methylamino)-carbonyl]-sulfid

| | allein | + 6% epoxidiertes Sojaöl mit einem Epoxidierungsgrad von 6 % |
|---|---|---|
| Ausgangsgehalt der Verbindung der Formel 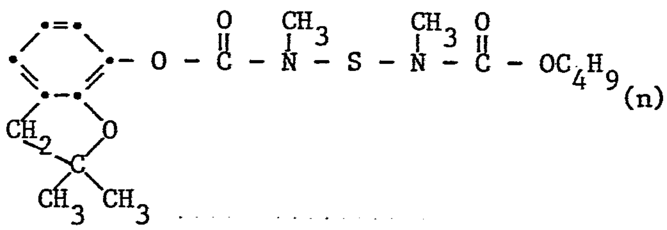 | 96,2% | 90,9% |
| Gehalt nach der Lagerung bei 65°C | | |
| nach 4 Wochen | 91,5% | 90,9% |
| nach 16 Wochen | 60,3% | 90,0% |

<u>Beispiel 2:</u> Stabilität der Verbindung der Formel

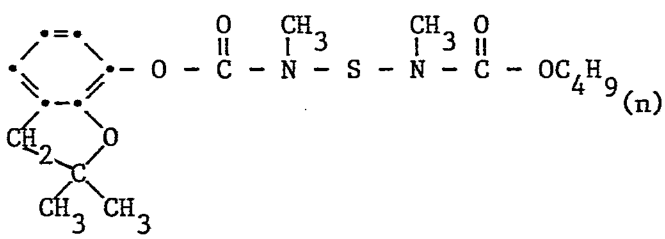

in einem 40%igen Emulsionskonzentrat

Zusammensetzung der Emulsionskonzentrate

| A | B |
|---|---|
| 40 % Titelverbindung | 40 % Titelverbindung |
| - | 2,5 % epoxidiertes Sojaöl mit einem Epoxidierungsgrad von 6 % |
| 4 % äthoxyliertes Ricinusöl | 4 % äthoxyliertes Ricinusöl |

| | | | |
|---|---|---|---|
| 6% Ca-Phenylsulfonat | | 6% Ca-Phenylsulfonat | |
| 50% Xylol | | 47,5% Xylol | |
| $\alpha_{4}^{20°}$ = 0,985-1,005 g/ml | | 0,985-1,005 g/ml | |

| Gehalt an Titelverbindung in den Emulsionskonzentraten nach Lagerung bei 65°C | A | B |
|---|---|---|
| 4 Wochen | 38,4% | 40,3% |
| 16 Wochen | 35,5% | 40,1% |

Patentansprüche

1. Ein stabilisiertes Mittel, welches neben der Verbindung der Formel

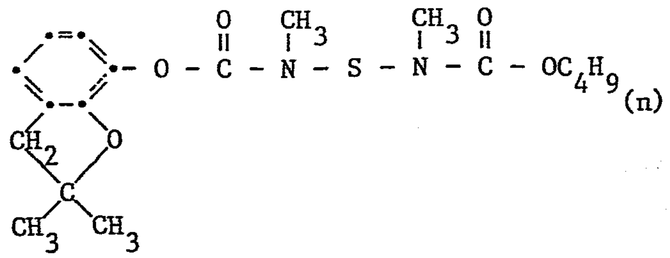

als insektizide Komponente ein epoxidiertes Sojaöl enthält.

2. Ein stabilisiertes Mittel gemäss Anspruch 1, welches 0,1 bis 99% der Verbindung der Formel

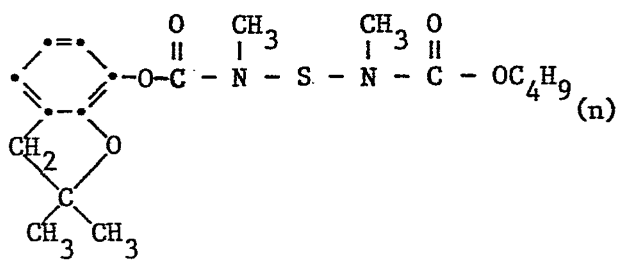

als insektizide Komponente und 0,01 bis 20% bezogen auf den Wirkstoff epoxidiertes Sojaöl mit einer Verseifungszahl von 170 bis 200, einer Jodzahl von max. 6 und einem Epoxidierungsgrad von 4 bis 12% enthält.

3. Ein stabilisiertes Mittel gemäss Anspruch 2, welches 0,1 bis 99% der Verbindung der Formel

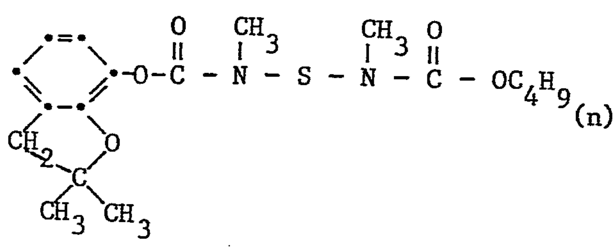

als insektizide Komponente und 1 bis 10% bezogen auf den Wirkstoff epoxidiertes Sojaöl mit einer Verseifungszahl von 175 bis 185, einer Jodzahl von max. 6 und einem Epoxidierungsgrad von 6 bis 7 enthält.

4. Ein Verfahren zur Stabilisierung von insektiziden Mitteln, welche 0,1 bis 99% der Verbindung der Formel

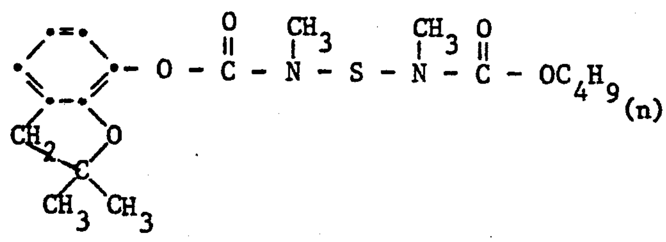

als aktive Komponente sowie andere Zusatzstoffe enthalten, dadurch gekennzeichnet, dass man diesen Mitteln 0,01 bis 20% bezogen auf den Wirkstoff epoxidiertes Sojaöl mit einer Verseifungszahl von 170 bis 200 einer Jodzahl von max. 6 und einem Epoxidierungsgrad von 4 bis 12 % zusetzt.

5. Ein Verfahren zur Stabilisierung der Verbindung der Formel

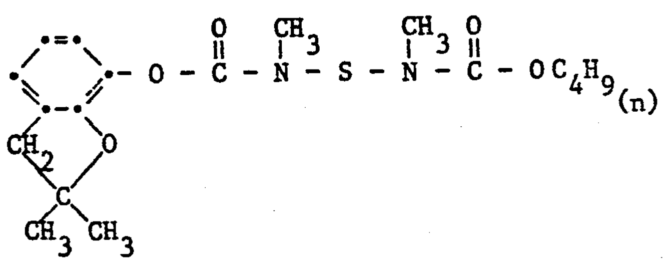

dadurch gekennzeichnet, dass man dieser Verbindung epoxidiertes Sojaöl zusetzt.

6. Ein Verfahren gemäss Anspruch 5 zur Stabilisierung der Verbindung der Formel

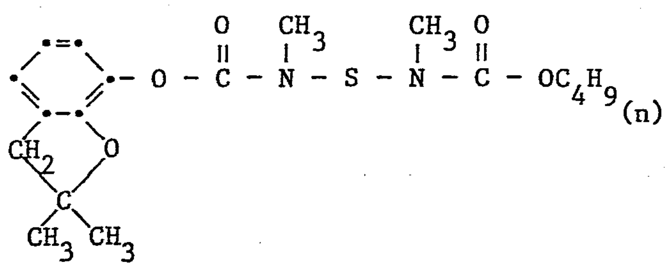

dadurch gekennzeichnet, dass man dieser Verbindung 0,01 bis 20 % epoxidiertes Sojaöl mit einer Verseifungszahl von 170 bis 200, einer Jodzahl von max. 6 und einem Epoxidierungsgrad von 4 bis 12 % zusetzt.

7. Ein Verfahren gemäss Anspruch 6 zur Stabilisierung der Verbindung der Formel

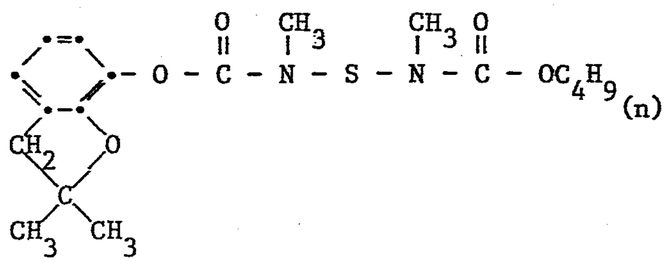

dadurch gekennzeichnet, dass man dieser Verbindung 1 bis 10 % epoxidiertes Sojaöl mit einer Verseifungszahl von 175 bis 185, einer Jodzahl von max. 6 und einem Epoxidierungsgrad von 6 bis 7 % zusetzt.

FO 7.5. WH/gs*/mg*

0121498

Europäisches Patentamt

# EUROPÄISCHER RECHERCHENBERICHT

Nummer der Anmeldung

EP 84 81 0143

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| D,Y | US-A-4 281 014 (J. YAFFE) * Insgesamt * | 1-7 | A 01 N 25/22<br>A 01 N 47/24 |
| Y | DE-A-2 812 622 (CIBA-GEIGY) * Ansprüche 8,10-12; Seite 12, Zeilen 12-27 * | 1-7 | |
| A | WO-A-8 204 055 (CHINOIN GYOGYSZER- ES VEGYESZETI TERMEKEK GYARA) * Ansprüche 1,12 * | 1,5 | |
| A | EP-A-0 017 265 (SHELL) * Seite 3, Zeile 26 - Seite 4, Zeile 18; Seite 5, Zeilen 17-26; Beispiele 2-5; Ansprüche 1,4,6,7 * | 1-7 | |
| | | | RECHERCHIERTE SACHGEBIETE (Int. Cl. ³) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 03-07-1984 | FLETCHER A.S. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument